# FASCICULE DE BREVET EUROPEEN

(11) **EP 2 805 032 B1**
(45) Date de publication et mention de la délivrance du brevet: **15.05.2019**
(21) Numéro de dépôt: 12821265.1
(22) Date de dépôt: 14.12.2012
(51) Int. Cl.: F01K 23/06, F01K 13/02, F02G 5/02, F01N 5/02, F01K 25/00, F01K 1/16

(54) **DISPOSITIF DE CONTRÔLE D'UN FLUIDE DE TRAVAIL DANS UN CIRCUIT FERMÉ FONCTIONNANT SELON UN CYCLE DE RANKINE ET PROCÉDÉ UTILISANT UN TEL DISPOSITIF**
VORRICHTUNG ZUR STEUERUNG EINER ARBEITSFLÜSSIGKEIT IN EINEM ENTSPRECHEND EINEM RANKINE-KREISLAUF BETRIEBENEN GESCHLOSSENEN KREISLAUF UND VERFAHREN MIT BESAGTER VORRICHTUNG
DEVICE FOR CONTROLLING A WORKING FLUID IN A CLOSED CIRCUIT OPERATING ACCORDING TO THE RANKINE CYCLE, AND METHOD USING SAID DEVICE

(30) Priorité: 18.01.2012 FR 1200158
(43) Date de publication de la demande: 26.11.2014
(73) Titulaire: IFP Energies nouvelles, 92500 Rueil-Malmaison (FR)
(72) Inventeur: SMAGUE, Pascal, F-92500 Rueil-Malmaison (FR); LEDUC, Pierre, F-78650 Beynes (FR); LEVESQUE, Richard, F-78150 Le Chesnay (FR)
(74) Mandataire: IFP Energies nouvelles
(86) Numéro de dépôt international: PCT/FR2012/000522
(87) Numéro de publication internationale: WO 2013/107949

(56) Documents cités:
- EP-A1- 2 360 355
- WO-A2-2010/009839
- CN-A- 102 230 401
- DE-A1-102009 022 865
- JP-A- H02 110 291
- US-A- 4 300 353

## Description

La présente invention se rapporte à un dispositif de contrôle d'un fluide de travail contenu dans un circuit fermé fonctionnant selon un cycle de Rankine et à un procédé utilisant un tel dispositif.

Comme cela est largement connu, le cycle de Rankine est un cycle thermodynamique par lequel de la chaleur provenant d'une source de chaleur externe est transmise à un circuit fermé qui contient un fluide de travail.

Ce cycle se décompose généralement en une étape durant laquelle le fluide de travail à bas point de congélation, généralement de l'eau, est comprimée de manière isentropique, suivie d'une étape où cette eau comprimée est chauffée et vaporisée au contact d'une source de chaleur. Cette vapeur d'eau est ensuite détendue, au cours d'une autre étape, de manière isentropique dans une machine de détente, puis, dans une dernière étape, cette vapeur détendue est refroidie et condensée au contact d'une source froide.

Pour réaliser ces différentes étapes, le circuit comprend une pompe volumétrique pour comprimer l'eau sous forme liquide et la faire circuler dans le circuit, un échangeur de chaleur (ou évaporateur) qui est balayé par un fluide chaud pour réaliser la vaporisation au moins partielle de l'eau comprimée, une machine de détente pour détendre la vapeur, telle qu'une turbine, qui transforme l'énergie de cette vapeur en une autre énergie, comme une énergie mécanique ou électrique, et un autre échangeur de chaleur (ou condenseur) grâce auquel la chaleur contenue dans la vapeur est cédée à une source froide, généralement de l'air extérieur qui balaye ce condenseur, pour transformer cette vapeur en de l'eau sous forme liquide.

Il est également connu, notamment par le document FR 2 884 555, d'utiliser l'énergie calorifique véhiculée par les gaz d'échappement d'un moteur à combustion interne, en particulier celui utilisé pour des véhicules automobiles, comme source chaude pour assurer le chauffage et la vaporisation du fluide traversant l'évaporateur.

Ceci permet d'améliorer l'efficacité énergétique de ce moteur en récupérant une grande partie de l'énergie perdue à l'échappement pour la transformer en une énergie qui peut être utilisée pour le véhicule automobile au travers du circuit à cycle de Rankine.

Comme cela est largement connu, l'utilisation d'un fluide de travail aqueux dans un circuit à cycle de Rankine présente l'avantage d'avoir des caractéristiques permettant d'obtenir une courbe de saturation maximale tout en présentant l'avantage d'être non dangereuse.

Cependant, cette eau a pour spécificité d'avoir un point de congélation à des températures basses (aux environs de 0°C) et il est habituel de lui ajouter des additifs antigel, comme du glycol, pour baisser ce point de congélation à des niveaux de températures acceptables, de l'ordre de -15 à -30°C.

L'ajout de tels additifs a pour inconvénients de changer les caractéristiques de l'eau, en particulier ses caractéristiques de vaporisation, et la source chaude provenant des gaz d'échappement peut s'avérer insuffisante pour réaliser de manière satisfaisante cette vaporisation.

De plus, au fil du temps, cette eau additivée subit un vieillissement imprévisible au fur et à mesure des changements de phases liquide/vapeur. Ce vieillissement imprévisible peut entraîner des changements de phases incomplets de cette eau, ce qui génère un dysfonctionnement du circuit à cycle de Rankine.

Dans d'autres types de circuit fermé à cycle de Rankine, cette eau additivée est remplacée par de l'eau pure qui possède de très bonnes propriétés pour la récupération d'énergie.

Cependant, l'emploi d'une telle eau pure n'empêche en aucune manière son gel lors de très basses températures de l'air ambiant.

Ce gel peut occasionner des dommages irréversibles des constituants du circuit, comme la fissuration des échangeurs, la destruction de la pompe, voire l'éclatement des conduites reliant les constituants entre eux.

Comme mieux décrit dans la demande de brevet français N° 2 956 153, le demandeur a pallié ces inconvénients en proposant un dispositif et un procédé qui empêchent le gel de cet eau.

Pour cela, le fluide de travail est vidangé en dehors du circuit fermé pour être recueillie dans un réservoir de stockage, lors de l'arrêt du fonctionnement de ce circuit.

La demande de brevet US 4,300,353 décrit un système de propulsion d'un véhicule, ce système de propulsion comprend un circuit selon un cycle de Rankine.

La demande de brevet CN 102230401 A concerne un cycle de Rankine organique à basse température, dans lequel est prévu un système de remplacement du fluide de travail.

La demande de brevet JP H02-110291 A concerne un cycle de Rankine, dans lequel est prévu un réservoir spécifique de stockage du fluide de travail.

Le demandeur a encore perfectionné ce dispositif de manière à faciliter la vidange du circuit fermé de manière simple et économe pour éviter le gel de l'eau et cela sans utiliser la pompe de circulation. En effet, la pompe de circulation du circuit fermé ne permet pas fonctionnellement d'assurer la vidange et le remplissage complets de ce circuit, sa technologie lui imposant bien souvent un fonctionnement en charge et monodirectionnel.

A cet effet, l'invention concerne un dispositif de contrôle d'un fluide de travail à bas point de congélation circulant dans un circuit fermé fonctionnant selon un cycle de Rankine, ledit circuit comprenant une pompe de compression/circulation du fluide sous forme liquide, un échangeur de chaleur balayé par une source chaude pour l'évaporation dudit fluide, des moyens de détente du fluide sous forme vapeur, un échangeur de refroidissement balayé par une source froide pour la condensation du fluide de travail, un réservoir de fluide de travail, et des conduites de circulation du fluide de travail, où le réservoir est relié à un générateur de dépression et où le dispositif comprend aussi toutes les autres caractéristiques de la revendication indépendante 1.

Le générateur de dépression est une pompe à vide.

Le circuit fermé peut comporter des moyens contrôlés de mise à l'air libre.

L'une au moins des conduites de circulation du circuit peut comporter des moyens contrôlés de mise à l'air libre.

Le réservoir peut comporter des moyens contrôlés de mise à l'air libre pour l'intérieur dudit réservoir.

Le circuit fermé peut comporter un circuit de contournement de la pompe.

Le circuit de contournement peut comprendre une conduite de contournement portant des moyens de vannage contrôlés.

Le réservoir peut comporter un capteur de température du fluide qu'il contient.

Le circuit fermé peut comporter un capteur de température placé au voisinage l'entrée de la pompe.

Le circuit fermé comprend une conduite de circulation portant des moyens de vannage contrôlés pour relier la sortie du condenseur à l'entrée du réservoir et une conduite de circulation portant des moyens de vannage contrôlés pour relier la sortie du réservoir à l'entrée de la pompe.

Le fluide de travail peut être de l'eau dépourvue d'additif antigel.

L'invention concerne également un procédé, défini par la revendication indépendante 10, de contrôle d'un fluide de travail à bas point de congélation circulant dans un circuit fermé fonctionnant selon un cycle de Rankine, ledit circuit comprenant entre autres une pompe de compression/circulation du fluide sous forme liquide, un échangeur de chaleur balayé par une source chaude pour l'évaporation dudit fluide, des moyens de détente du fluide sous forme vapeur, un échangeur de refroidissement balayé par une source froide pour la condensation du fluide de travail, un réservoir de fluide de travail, et des conduites de circulation du fluide de travail, caractérisé en ce qu'il consiste, lors de l'arrêt du fonctionnement du circuit, à générer une dépression à l'intérieur du réservoir pour transférer le fluide de travail contenu dans ledit circuit vers ce réservoir.

Le procédé consiste à générer une dépression à l'intérieur du réservoir par une pompe à vide.

Le procédé peut additionnellement consister à transférer le fluide vers le réservoir lorsque la température du fluide de travail à l'entrée de la pompe est inférieure à une température seuil.

Le procédé peut additionnellement consister à isoler le réservoir du circuit après le transfert du fluide de travail.

Le procédé peut additionnellement consister, lors du redémarrage du fonctionnement du circuit, à soutirer le fluide de travail contenu dans le réservoir pour remplir le circuit fermé.

Le procédé peut additionnellement consister à soutirer le fluide du réservoir lorsque la température du fluide de travail à l'intérieur de ce réservoir est supérieure à une température seuil.

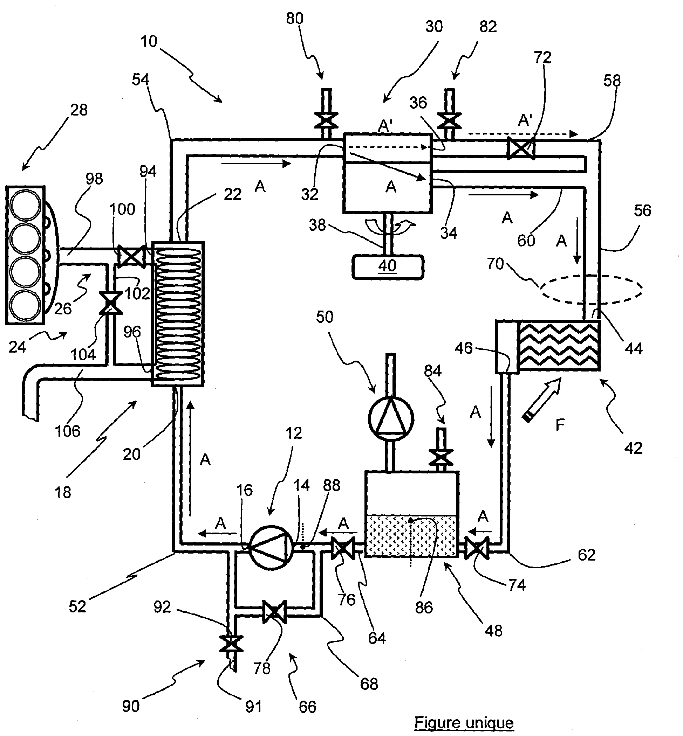

Les autres caractéristiques et avantages de l'invention vont apparaître à la lecture de la description qui va suivre, donnée à titre uniquement illustratif et non limitatif, et à laquelle est annexée la figure unique qui montre un dispositif de contrôle d'un fluide de travail d'un circuit fermé fonctionnant selon un cycle de Rankine.

Sur cette figure, le circuit fermé à cycle de Rankine 10 comprend une pompe volumétrique de compression et de circulation 12 d'un fluide de travail, dénommée pompe dans la suite de la description, avec une entrée 14 du fluide de travail sous forme liquide et une sortie 16 de ce fluide de travail également sous forme liquide mais comprimé sous une pression élevée. Cette pompe est avantageusement entraînée en rotation par un moteur électrique (non représenté).

Ce circuit comporte aussi un échangeur de chaleur 18, dénommé évaporateur, traversé par le fluide de travail comprimé entre une entrée 20 de ce fluide liquide et une sortie 22 au travers de laquelle le fluide de travail ressort de cet évaporateur sous forme de vapeur comprimée. Cet évaporateur est parcouru par une source chaude 24 provenant des gaz d'échappement circulant dans la ligne d'échappement 26 d'un moteur à combustion interne 28 et plus particulièrement d'un moteur pour véhicule automobile.

Ce circuit comporte également une machine de détente 30 recevant par son entrée 32 le fluide de travail sous forme de vapeur comprimée à haute pression, ce fluide ressortant par la sortie 34 de cette machine sous forme de vapeur détendue à basse pression.

Cette machine comporte également une sortie de court-circuit 36 du fluide de travail sous forme de vapeur comprimée à haute pression qui permet de rendre inactive cette machine de détente lors du passage de la vapeur entre l'entrée 32 et la sortie de court-circuit 36.

Avantageusement, cette machine de détente peut être sous la forme d'une turbine de détente dont le rotor est entraîné en rotation par le fluide de travail sous forme de vapeur en entraînant un arbre de liaison 38. De manière préférentielle, cet arbre permet de transmettre l'énergie récupérée à tout dispositif transformateur, comme par exemple une génératrice électrique 40.

Cette machine de détente peut être également une machine à piston alternatif ou à piston rotatif dont l'arbre de sortie est relié au dispositif transformateur.

Le circuit comporte encore un échangeur de refroidissement 42, ou condenseur, avec une entrée 44 pour la vapeur basse pression détendue et une sortie 46 pour le fluide de travail transformé sous forme liquide après son passage dans ce condenseur. Ce condenseur est balayé par une source froide, généralement un flux d'air froid (Flèche F) à température ambiante, de manière à refroidir la vapeur détendue pour qu'elle se condense et se transforme en un liquide. Bien entendu, toute autre source froide de refroidissement, comme de l'eau, peut être utilisé pour assurer la condensation de la vapeur.

Ce circuit comporte également un réservoir fermé 48 qui permet de conserver le fluide de travail à l'état liquide même lorsque la température extérieure ambiante est à un niveau pouvant entraîner son gel.

Ce réservoir porte un générateur de dépression, comme une pompe à vide 50, qui est raccordé à l'intérieur du réservoir. Avantageusement cette pompe à vide est entraînée en rotation par un moteur électrique (non représenté).

Les différents éléments du circuit sont reliés entre eux par des conduites de circulation de fluide 52, 54, 56, 58, 60, 62, 64 permettant de relier successivement la pompe avec l'évaporateur (conduite d'évaporateur 52), l'évaporateur avec la machine de détente (conduite de machine 54), cette machine avec la conduite de condenseur 56 connectée à l'entrée du condenseur, soit par la conduite de court-circuit 58 connectée à la sortie de court-circuit 36, soit par la conduite 60 reliée à sa sortie 34 de vapeur détendue à basse pression, le condenseur avec le réservoir (conduite de réservoir 62), et le réservoir à la pompe (conduite de pompe 64) pour que le fluide de travail circule selon le sens indiqué par les flèches A.

Le circuit comporte aussi un circuit de contournement 66 de la pompe 12 avec une conduite de contournement 68 reliant l'entrée 14 de cette pompe directement à sa sortie 16.

De manière préférentielle, le circuit peut comporter un vase d'expansion 70 qui permet d'absorber la variation volumique du fluide de travail circulant dans le circuit.

Des moyens de vannage contrôlés 72, 74, 76, 78, sous la forme de vannes de circulation, sont placés respectivement sur la conduite 58 (vanne de court-circuit 72), sur la conduite 62 (vanne amont réservoir 74), sur la conduite 64 (vanne aval réservoir 74) et sur la conduite 68 (vanne de contournement 78) de manière à contrôler la circulation du fluide de travail dans ces conduites.

De plus, des moyens de vannage contrôlés avec évacuation automatique de l'air 80, baptisés dans la suite de la description en tant que purgeur automatique, sont placés sur la conduite de machine 54 alors que des moyens contrôlés de mise à l'air libre 82 et 84, ici également sous la forme de vannes, sont placés respectivement sur la conduite de court-circuit 58 et en aval du moyen de vannage 72, et sur le haut du réservoir 48 en permettant ainsi de mettre l'intérieur de cette conduite et/ou du réservoir en communication avec l'air libre.

Dans le circuit illustré sur la figure, un capteur de température 86 est placé à l'intérieur du réservoir, et avantageusement en son centre, pour mesurer la température du fluide de travail qui y est contenu et un autre capteur de température 88 est placé sur la conduite 64 au voisinage de l'entrée 14 de la pompe pour mesurer la température du fluide de travail à l'entrée de cette pompe et en aval de la vanne de circulation 76.

Avantageusement mais non obligatoirement, le circuit fermé peut être relié à un dispositif de vidage de circuit 90 avec une conduite de vidage 91 issue de la conduite de contournement 68 et portant une vanne de vidage 92, sous la forme d'un robinet, qui sera utilisé pour extraire le fluide de travail de ce circuit lors des interventions de maintenance.

Dans la suite de la description, il sera fait mention de point haut et de point bas du circuit. Cette localisation correspond à la configuration de la figure où le réservoir 48 et la pompe 12 sont situés en point bas, c'est-à-dire en dessous de la machine de détente 30 qui est considérée comme étant placée en point haut.

De même, les termes amont et aval sont à considérer en fonction du sens de circulation du fluide de travail selon les flèches A de la figure.

Comme illustré sur la figure, la ligne d'échappement 26 traverse l'évaporateur entre une entrée de gaz d'échappement 94 et une sortie de gaz 96. Le conduit d'échappement 98 reliant le moteur à l'entrée de gaz 94 porte un moyen de vannage contrôlé 100. Une ligne de court-circuit 102 portant un autre moyen de vannage contrôlé 104 relie le conduit d'échappement 98 au conduit d'échappement 106 connecté à la sortie de gaz 96.

Bien entendu, les vannes de circulation et les vannes de mise à l'air libre sont contrôlées par tous moyens connus, comme des moteurs électriques, sous la supervision d'une unité de calcul/commande et plus particulièrement du calculateur du moteur à combustion interne.

Cette unité de calcul/commande contrôle également les moteurs d'entraînement de la pompe de circulation 12 et de la pompe à vide 50.

De plus, cette unité reçoit des informations provenant essentiellement de différents capteurs prévus dans ce circuit, comme des capteurs pour la pression de l'eau (ou de la vapeur d'eau), ainsi que des capteurs de températures 86 et 88. A partir des informations reçues, l'unité pilote des éléments du circuit pour obtenir la plage de fonctionnement souhaitée.

Pour la suite de la description, le fluide de travail à bas point de congélation circulant dans ce circuit est de l'eau. Cette eau possède la particularité d'être pure et de ne comporter aucun additif et plus particulièrement aucun additif évitant son gel. A titre de fluide de travail, tout autre fluide à changement de phase (liquide/vapeur) sans additif antigel et pouvant geler à basse température (aux environs de 0°C), peut être utilisé, comme par exemple des fluides organiques.

En fonctionnement nominal, l'eau circule dans le circuit selon un sens horaire (flèches A) en considérant la figure.

Pour cela, la vanne de court-circuit 72 ferme la conduite 58, les vannes amont et aval de réservoir 74 et 76 sont en position ouverte des conduites 62 et 64, et la vanne de contournement 78 ferme la conduite de contournement 68. Les vannes de mise à l'air libre 82 et 84 sont en position de fermeture ainsi que la vanne de vidage 92 et le purgeur automatique 80.

La vanne 100 du conduit d'échappement 98 est en position ouverte en laissant ainsi circuler les gaz d'échappement dans l'évaporateur entre l'entrée 94 et la sortie 96, et la vanne de court-circuit 104 est en position de fermeture.

La pompe à vide 50 est inactive et la pompe de circulation 12 est entraînée en rotation par son moteur électrique sous le contrôle de l'unité de calcul/commande.

Dans cette configuration, l'eau sort de la pompe 12 sous forme de liquide comprimé. Cette eau comprimée circule dans la conduite 52 pour aboutir à l'entrée 20 de l'évaporateur 18. Cette eau comprimée traverse l'évaporateur de manière à se transformer en vapeur sous l'effet de la chaleur balayant cet évaporateur et provenant des gaz d'échappement. La vapeur d'eau qui sort de l'évaporateur est véhiculée par la conduite 54 pour traverser la machine de détente 30 entre son entrée 32 et sa sortie 34 en lui transmettant l'énergie qu'elle contient. La vapeur d'eau détendue qui sort de cette machine de détente circule dans la conduite 60 pour aboutir à la conduite de condenseur 56. Cette vapeur d'eau traverse le condenseur 18 dans lequel elle se transforme en une eau liquide. Cette eau liquide est ensuite amenée par la conduite 62 à l'entrée du réservoir 48. Etant donné que ce réservoir est un réservoir fermé, cette eau ne fait que le traverser sans le remplir pour en ressortir par la conduite 64 et aboutir à l'entrée 14 de la pompe 12.

Lors de l'arrêt du fonctionnement du moteur 28, l'énergie calorifique des gaz d'échappement utilisée pour réaliser l'échange dans l'évaporateur 18 n'est plus fournie. Dans cette situation, le circuit 10 n'est plus opérationnel et passe en "Mode Veille".

Pendant cette phase de veille, le circuit fermé ne récupère plus d'énergie thermique provenant des gaz d'échappement. Dans ces conditions, la circulation du fluide de travail est interrompue suite à l'arrêt de la pompe de circulation par l'unité de calcul/commande. Cette unité commande l'ouverture de la vanne de court-circuit 72 de la conduite 58, ce qui a pour effet d'entraîner l'arrêt de la machine de détente 30. Les vannes de mise à l'air libre 82 et 84 sont en position de fermeture ainsi que le purgeur automatique 80.

Ce circuit reste en veille tant que la température de l'eau, mesurée par le capteur 88 à l'entrée 14 de la pompe de circulation 12, ne descend pas au dessous d'un seuil de température To, ici aux environs de 5°C.

Il est à noter que le point le plus froid du circuit est défini comme celui étant à l'entrée de la pompe 12. En effet, ce point, à l'endroit duquel est placé le capteur 88, est le point qui va descendre le plus vite en température dans le circuit lorsque l'eau n'est plus en circulation et qu'il n'y a plus d'apport d'énergie calorifique par les gaz d'échappement du moteur.

Dès que la température mesurée est inférieure à la température seuil To, le circuit est activé par l'unité de calcul/commande pour suivre une configuration dite "Mode Gel".

Dans ce "Mode Gel", les vannes 72 et 78 sont commandées en position d'ouverture respectivement de la conduite de court-circuit 58 et de la conduite de contournement 68. Les vannes 74 et 76 sont commandées en position d'ouverture des conduites 62 et 64 et la vanne de mise à l'air libre 84 du réservoir 48 est commandée en position fermée. Le purgeur automatique 80 est maintenu dans une position de fermeture de la communication avec l'air libre alors que la vanne de mise à l'air libre 82 est en position d'ouverture.

La pompe à vide 50 est activée et compte tenu de la position en fermeture de la vanne de mise à l'air libre 84, une dépression est créée à l'intérieur du réservoir. Ceci permet en conséquence une aspiration du fluide de travail contenu dans l'ensemble du circuit vers l'intérieur du réservoir 48.

Avantageusement, la vidange du circuit pourra se réaliser par la circulation du fluide de travail selon le sens des flèches A entre la machine de détente 30 et le réservoir 48 (conduite de court-circuit 58 - conduite de condenseur 56 - condenseur 42 - conduite de réservoir 62) et selon le sens contraire des flèches A entre cette machine de détente et le réservoir (conduite de machine 54 - évaporateur 18 - conduite d'évaporateur 52 - conduite de contournement 68 - conduite de pompe 64).

Bien entendu, il est à la portée de l'homme du métier de calculer le moment où l'entraînement de la pompe à vide 50 est arrêté pour procéder à la vidange complète du fluide de travail du circuit et son stockage dans le réservoir.

Dès que le circuit est vidé de son fluide de travail qui est remplacé par de l'air véhiculé au travers de la vanne de mise à l'air libre 82, les vannes 74 et 76 sont commandées en fermeture des conduites 62 et 64. Ceci permet d'isoler le réservoir 48 du reste du circuit.

Après fermeture des vannes 74 et 76, la pompe à vide 50 est arrêtée et la vanne de mise à l'air libre 84 du réservoir 48 est commandée en position ouverte pour mettre l'intérieur de ce réservoir à la pression atmosphérique.

Ceci permet de vider complètement par gravité, compte tenu de la position en point bas du réservoir, et par aspiration sous l'effet de la dépression générée par la pompe à vide, le fluide de travail contenu dans le circuit et de le stocker dans le réservoir.

Ce réservoir est avantageusement construit pour résister au gel du fluide qu'il contient. A titre d'exemple non limitatif, le fluide de travail stocké dans le réservoir peut être protégé des risques de gel par un calorifugeage du réservoir qui l'isole thermiquement de l'air ambiant.

Cette opération de vidange se réalise ainsi sans mise en rotation de la pompe de circulation 12 dont les caractéristiques fonctionnelles et techniques ne sont pas adaptées à une opération de vidange du circuit.

De manière préférentielle, à la fin de cette opération de vidange, les vannes non fonctionnelles du circuit sont mises en configuration hors gel. Plus précisément, les vannes 72, 78, 100 et 104 ainsi la vanne de mise à l'air libre 82 et le purgeur automatique 80 sont commandés ou maintenus en position d'ouverture.

Lorsque le moteur thermique 28 est redémarré, le fonctionnement du circuit fermé bascule en "Mode Dégel".

Ce fonctionnement n'est réalisé que lorsque la température mesurée par le capteur de température 86 du réservoir est supérieure au seuil de température To, fixé aux environs de 5°C. Pour ce "Mode Dégel", il est considéré que le centre du réservoir est le point où le fluide de travail va monter le plus lentement en température compte-tenu de l'inertie thermique liée à la quantité de fluide présent.

Pour ce mode, les vannes amont et aval de réservoir 74 et 76 sont commandées en position d'ouverture des conduites 62 et 64, et la vanne de mise à l'air libre de réservoir 84 est en position ouverte. La vanne de contournement 78 est fermée ainsi que la vanne 100 du conduit d'échappement 98 alors que la vanne 104 de la ligne de court-circuit 102 est ouverte. Le purgeur automatique 80 est commandé en position d'ouverture, la vanne de mise à l'air libre 82 est fermée et la vanne de court-circuit 72 est ouverte. La pompe de circulation 12 est actionnée et le fluide de travail contenu dans le réservoir, ici sous forme d'eau liquide, est soutiré de ce réservoir pour remplir le circuit. Plus précisément, ce fluide est amené dans la conduite 62, circule dans l'évaporateur 18, et traverse la machine de détente 30 entre son entrée 32 et sa sortie de court-circuit 36 pour circuler dans la conduite de court-circuit 58 (Flèches A'). Ce fluide circule ensuite dans la conduite 56, parcoure le condenseur 42, et circule dans la conduite 62 pour arriver à l'entrée du réservoir 48. Le fluide traverse ensuite ce réservoir pour arriver à l'entrée 14 de la pompe 12.

Durant le cheminement de l'eau, la purge en air présent dans les différents éléments (conduites, évaporateur,...) du circuit se fait par l'intermédiaire du purgeur automatique 80 et la vanne de mise l'air libre 84 du réservoir 48 permet de compenser par de l'air la baisse du niveau de l'eau à l'intérieur du réservoir.

Comme pour la vidange du circuit, l'homme du métier est à même de déterminer la durée de remplissage du circuit, notamment en fonction du débit de la pompe de circulation et du volume du fluide dans le circuit.

Lorsque la totalité du circuit est rempli par de l'eau, la vanne 104 est commandée en position de fermeture, la vanne 100 du conduit d'échappement 98 est en position d'ouverture et le purgeur automatique 80 ainsi que la vanne de court-circuit 72 sont fermés.

Les gaz d'échappement du moteur 28 traversent donc l'évaporateur 18 en échangeant les calories qu'ils contiennent avec l'eau qui circule dans l'évaporateur 18 en transformant cette eau en vapeur.

Lorsque la quantité de vapeur est suffisamment importante, la vanne court-circuit 72 est placée en position de fermeture avec pour conséquence la mise en action de la machine de détente 30 par la circulation de la vapeur d'eau entre l'entrée 32 et la sortie 34 de cette machine.

Après cette étape, le circuit repasse en fonctionnement nominal comme décrit ci-dessus.

## Revendications

1. Dispositif de contrôle adapté pour le contrôle d'un fluide de travail à bas point de congélation circulant dans un circuit fermé (10) fonctionnant selon un cycle de Rankine, ledit circuit comprenant une pompe de compression/circulation (12) du fluide sous forme liquide, un échangeur de chaleur (18) balayé par une source chaude (24) pour l'évaporation dudit fluide, des moyens de détente (30) du fluide sous forme vapeur, un échangeur de refroidissement (42) balayé par une source froide (F) pour la condensation du fluide de travail, un réservoir de fluide de travail (48), et des conduites de circulation du fluide de travail (52, 54, 56, 58, 60, 62), où le dispositif de contrôle comprend une pompe à vide (50) pour créer une dépression dans ledit réservoir de fluide de travail (48) et en ce que le circuit fermé comprend une conduite de circulation (62) portant des moyens de vannage contrôlés (74) pour relier la sortie (46) du condenseur à l'entrée du réservoir et une conduite de circulation (64) portant des moyens de vannage contrôlés (76) pour relier la sortie (46) du réservoir (48) à l'entrée de la pompe (12).

2. Dispositif selon la revendication 1, **caractérisé en ce que** le circuit fermé (10) comporte des moyens contrôlés de mise à l'air libre (54, 82).

3. Dispositif selon la revendication 2, **caractérisé en ce que** l'une (58) au moins des conduites de circulation du circuit comporte des moyens contrôlés de mise à l'air libre (82).

4. Dispositif selon la revendication 2, **caractérisé en ce que** le réservoir (48) comporte des moyens contrôlés de mise à l'air libre (82) pour l'intérieur dudit réservoir.

5. Dispositif selon l'une des revendications précédentes, **caractérisé en ce que** le circuit fermé comporte un circuit de contournement (66) de la pompe (12).

6. Dispositif selon la revendication 5, **caractérisé en ce que** le circuit de contournement (66) comprend une conduite de contournement (68) portant des moyens de vannage contrôlés (78).

7. Dispositif selon l'une des revendications précédentes, **caractérisé en ce que** le réservoir (52) comporte un capteur de température (86) du fluide qu'il contient.

8. Dispositif selon l'une des revendications précédentes, **caractérisé en ce que** le circuit fermé (10) comporte un capteur de température (88) placé au voisinage l'entrée (14) de la pompe (12).

9. Dispositif selon la revendication 1, **caractérisé en ce que** le fluide de travail est de l'eau dépourvue d'additif antigel.

10. Procédé de contrôle d'un fluide de travail à bas point de congélation circulant dans un circuit fermé (10) fonctionnant selon un cycle de Rankine, ledit circuit comprenant une pompe de compression/circulation (12) du fluide sous forme liquide, un échangeur de chaleur (18) balayé par une source chaude (24) pour l'évaporation dudit fluide, des moyens de détente (30) du fluide sous forme vapeur, un échangeur de refroidissement (42) balayé par une source froide (F) pour la condensation du fluide de travail, un réservoir de fluide de travail (48), et des conduites de circulation du fluide de travail (52, 54, 56 ,58, 60, 62), et le circuit fermé comprend une conduite de circulation (62) portant des moyens de vannage contrôlés (74) pour relier la sortie (46) du condenseur à l'entrée du réservoir et une conduite de circulation (64) portant des moyens de vannage contrôlés (76) pour relier la sortie (46) du réservoir (48) à l'entrée de la pompe (12), où il consiste, lors de l'arrêt du fonctionnement du circuit, à générer une dépression à l'intérieur du réservoir (48) par une pompe à vide (50) pour transférer le fluide de travail contenu dans ledit circuit vers ce réservoir.

11. Procédé selon la revendication 10, **caractérisé en ce qu'**il consiste à transférer le fluide vers le réservoir lorsque la température du fluide de travail à l'entrée (14) de la pompe (12) est inférieure à une température seuil (To).

12. Procédé selon l'une des revendications 10 ou 11, **caractérisé en ce qu'**il consiste à isoler le réservoir (48) du circuit après le transfert du fluide de travail.

13. Procédé selon l'une des revendications 10 à 12, **caractérisé en ce qu'**il consiste, lors du redémarrage du fonctionnement du circuit, à soutirer le fluide de travail contenu dans le réservoir pour remplir le circuit fermé.

14. Procédé selon la revendication 13, **caractérisé en ce qu'**il consiste à soutirer le fluide du réservoir lorsque la température du fluide de travail à l'intérieur de ce réservoir est supérieure à une température seuil (To).

## Patentansprüche

1. Steuervorrichtung, die für die Steuerung eines Arbeitsfluids mit niedrigem Gefrierpunkt, das in einem geschlossenen Kreislauf (10) zirkuliert, der nach einem Rankine-Zyklus funktioniert, vorgesehen ist, wobei der Kreislauf eine Kompressions-/Zirkulationspumpe (12) des Fluids in flüssiger Form, einen Wärmetauscher (18), der von einer Wärmequelle (24) zur Verdampfung des Fluids überstreift wird, Druckminderungsmittel (30) des Fluids in Dampfform, einen Kühltauscher (42), der von einer Kältequelle (F) zur Kondensation des Arbeitsfluids überstreift wird, einen Arbeitsfluidbehälter (48) und Zirkulationsleitungen des Arbeitsfluids (52, 54, 56, 58, 60, 62) umfasst, wobei die Steuervorrichtung eine Vakuumpumpe (50) umfasst, um einen Unterdruck in dem Arbeitsfluidbehälter (48) zu erzeugen, und dass der geschlossene Kreislauf eine Zirkulationsleitung (62) umfasst, die gesteuerte Ventilmittel (74) trägt, um den Ausgang (46) des Kondensators mit dem Eingang des Behälters zu verbinden, und eine Zirkulationsleitung (64), die gesteuerte Ventilmittel (76) trägt, um den Ausgang (46) des Behälters (48) mit dem Eingang der Pumpe (12) zu verbinden.

2. Vorrichtung nach Anspruch 1, **dadurch gekennzeichnet, dass** der geschlossene Kreislauf (10) gesteuerte Lüftungsmittel (54, 82) umfasst.

3. Vorrichtung nach Anspruch 2, **dadurch gekennzeichnet, dass** mindestens eine der Zirkulationsleitungen (58) des Kreislaufs gesteuerte Lüftungsmittel (82) umfasst.

4. Vorrichtung nach Anspruch 2, **dadurch gekennzeichnet, dass** der Behälter (48) gesteuerte Lüftungsmittel (82) für das Innere des Behälters umfasst.

5. Vorrichtung nach einem der vorhergehenden Ansprüche, **dadurch gekennzeichnet, dass** der geschlossene Kreislauf einen Umgehungskreislauf (66) der Pumpe (12) umfasst.

6. Vorrichtung nach Anspruch 5, **dadurch gekennzeichnet, dass** der Umgehungskreislauf (66) eine Umgehungsleitung (68) umfasst, die gesteuerte Ventilmittel (78) trägt.

7. Vorrichtung nach einem der vorhergehenden Ansprüche, **dadurch gekennzeichnet, dass** der Behälter (52) einen Temperaturfühler (86) für das Fluid, das er enthält, umfasst.

8. Vorrichtung nach einem der vorhergehenden Ansprüche, **dadurch gekennzeichnet, dass** der geschlossene Kreislauf (10) einen Temperaturfühler (88) umfasst, der in der Nähe des Eingangs (14) der Pumpe (12) angeordnet ist.

9. Vorrichtung nach Anspruch 1, **dadurch gekennzeichnet, dass** das Arbeitsfluid Wasser ohne Frostschutzmittel ist.

10. Verfahren für die Steuerung eines Arbeitsfluids mit niedrigem Gefrierpunkt, das in einem geschlossenen Kreislauf (10) zirkuliert, der nach einem Rankine-Zyklus funktioniert, wobei der Kreislauf eine Kompressions-/Zirkulationspumpe (12) des Fluids in flüssiger Form, einen Wärmetauscher (18), der von einer Wärmequelle (24) zur Verdampfung des Fluids überstreift wird, Druckminderungsmittel (30) des Fluids in Dampfform, einen Kühltauscher (42), der von einer Kältequelle (F) zur Kondensation des Arbeitsfluids überstreift wird, einen Arbeitsfluidbehälter (48) und Zirkulationsleitungen des Arbeitsfluids (52, 54, 56, 58, 60, 62) umfasst, wobei der geschlossene Kreislauf eine Zirkulationsleitung (62) umfasst, die gesteuerte Ventilmittel (74) trägt, um den Ausgang (46) des Kondensators mit dem Eingang des Behälters zu verbinden, und eine Zirkulationsleitung (64), die gesteuerte Ventilmittel (76) trägt, um den Ausgang (46) des Behälters (48) mit dem Eingang der Pumpe (12) zu verbinden, wobei es darin besteht, bei der Einstellung der Funktion des Kreislaufs einen Unterdruck im Inneren des Behälters (48) durch eine Vakuumpumpe (50) zu erzeugen, um das in dem Kreislauf enthaltene Arbeitsfluid zu diesem Behälter weiterzuleiten.

11. Verfahren nach Anspruch 10, **dadurch gekennzeichnet, dass** es darin besteht, das Fluid zum Behälter weiterzuleiten, wenn die Temperatur des Arbeitsfluids am Eingang (14) der Pumpe (12) niedriger als eine Grenztemperatur (To) ist.

12. Verfahren nach einem der Ansprüche 10 oder 11, **dadurch gekennzeichnet, dass** es darin besteht, den Behälter (48) von dem Kreislauf nach der Weiterleitung des Arbeitsfluids zu trennen.

13. Verfahren nach einem der Ansprüche 10 bis 12, **dadurch gekennzeichnet, dass** es darin besteht, beim Neustart der Funktion des Kreislaufs das in dem Behälter enthaltene Arbeitsfluid zu entnehmen, um den geschlossenen Kreislauf zu füllen.

14. Verfahren nach Anspruch 13, **dadurch gekennzeichnet, dass** es darin besteht, das Fluid aus dem Behälter zu entnehmen, wenn die Temperatur des Arbeitsfluids im Inneren dieses Behälters höher als eine Grenztemperatur (To) ist.

## Claims

1. A control device suited to control a working fluid with low freezing point circulating in a closed loop (10) operating on a Rankine cycle, said loop comprising a compression/circulation pump (12) for the fluid in liquid form, a heat exchanger (18) swept by a hot source (24) for evaporation of said fluid, expansion means (30) for the fluid in vapour form, a cooling exchanger (42) swept by a cold source (F) for condensation of the working fluid, a working fluid tank (48) and working fluid circulation lines (52, 54, 56, 58, 60, 62), wherein the control device comprises a vacuum pump (50) for creating a depression in said working fluid tank (48) and the closed loop comprises a circulation line (62) carrying controlled throttling means (74) for connecting condenser outlet (46) to the tank inlet and a circulation line (64) carrying controlled throttling means (76) for connecting outlet (46) of tank (48) to the inlet of pump (12).

2. A device as claimed in claim 1, **characterized in that** closed loop (10) comprises controlled vent-to-atmosphere means (54, 82).

3. A device as claimed in claim 2, **characterized in that** at least one (58) of the circulation lines of the loop comprises controlled vent-to-atmosphere means (82).

4. A device as claimed in claim 2, **characterized in that** tank (48) comprises controlled vent-to-atmosphere means (82) for the inside of said tank.

5. A device as claimed in any one of the previous claims, **characterized in that** the closed loop comprises a bypass circuit (66) bypassing pump (12).

6. A device as claimed in claim 5, **characterized in that** bypass circuit (66) comprises a bypass line (68) carrying controlled throttling means (78).

7. A device as claimed in any one of the previous claims, **characterized in that** tank (52) comprises a temperature detector (86) for the fluid contained therein.

8. A device as claimed in any one of the previous claims, **characterized in that** closed loop (10) comprises a temperature detector (88) arranged close to inlet (14) of pump (12).

9. A device as claimed in claim 1, **characterized in that** the working fluid is water without an antifreeze additive.

10. A method of controlling a working fluid with low freezing point circulating in a closed loop (10) operating on a Rankine cycle, said loop comprising a compression/circulation pump (12) for the fluid in liquid form, a heat exchanger (18) swept by a hot source (24) for evaporation of said fluid, expansion means (30) for the fluid in vapour form, a cooling exchanger (42) swept by a cold source (F) for condensation of the working fluid, a working fluid tank (48) and working fluid circulation lines (52, 54, 56, 58, 60, 62), and the closed loop comprises a circulation line (62) carrying controlled throttling means (74) for connecting condenser outlet (46) to the tank inlet and a circulation line (64) carrying controlled throttling means (76) for connecting outlet (46) of tank (48) to the inlet of pump (12), wherein it consists, when the loop is at standstill, in generating a depression inside tank (48) by means of a vacuum pump (50) so as to transfer the working fluid contained in said loop to this tank.

11. A method as claimed in claim 10, **characterized in that** it consists in transferring the fluid to the tank when the temperature of the working fluid at inlet (14) of pump (12) is below a threshold temperature (To).

12. A method as claimed in any one of claims 10 or 11, **characterized in that** it consists in isolating tank (48) from the loop after transferring the working fluid.

13. A method as claimed in any one of claims 10 to 12, **characterized in that** it consists, upon starting operation of the loop again, in withdrawing the working fluid contained in the tank so as to fill the closed loop.

14. A method as claimed in claim 13, **characterized in that** it consists in withdrawing the fluid from the tank when the temperature of the working fluid in this tank is above a threshold temperature (To).
